**Europäisches Patentamt**

(19) **European Patent Office**

**Office européen des brevets**

(11) Veröffentlichungsnummer : **0 103 222 B1**

(12) **EUROPÄISCHE PATENTSCHRIFT**

(45) Veröffentlichungstag der Patentschrift :
07.05.86

(51) Int. Cl.⁴ : **B 60 S   3/06**

(21) Anmeldenummer : **83108399.3**

(22) Anmeldetag : **26.08.83**

(54) **Waschvorrichtung für Fahrzeuge, insbesondere Omnibusse und Kastenwagen.**

(30) Priorität : **09.09.82 DE 3233406**

(43) Veröffentlichungstag der Anmeldung :
**21.03.84 Patentblatt 84/12**

(45) Bekanntmachung des Hinweises auf die Patenterteilung : **07.05.86 Patentblatt 86/19**

(84) Benannte Vertragsstaaten :
**BE CH DE FR GB IT LI NL SE**

(56) Entgegenhaltungen :
**DE-A- 1 630 414**
**DE-A- 2 228 567**
**DE-B- 1 455 648**
**DE-B- 1 951 067**
**DE-C- 2 057 395**
**US-A- 3 840 931**

(73) Patentinhaber : **Loose, Klaus W.**
**Segeberger Strasse 12**
**D-2360 Schieren (DE)**

**Dölitzsch, Heinz O.**
**Adolfstrasse 73**
**D-2000 Hamburg 76 (DE)**

(72) Erfinder : **Loose, Klaus W.**
**Segeberger Strasse 12**
**D-2360 Schieren (DE)**
Erfinder : **Dölitzsch, Heinz O.**
**Adolfstrasse 73**
**D-2000 Hamburg 76 (DE)**

(74) Vertreter : **Richter, Joachim, Dipl.-Ing. et al**
**Patentanwälte Richter u.Werdermann Neuer Wall 10**
**D-2000 Hamburg 36 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Waschvorrichtung für Fahrzeuge, insbesondere Omnibusse und Kastenwagen, die mit eigenem Antrieb durch die Waschvorrichtung gefahren werden, unter Verwendung von mindestens zwei senkrechten, von Wasser beaufschlagten Waschbürsten, die an einem zur Fahrzeugdurchfahrtrichtung diagonal und waagerecht in einer Waschbrücke verlaufenden Querholm verfahrbar sind, wobei die Waschbürsten in ihrer Ausgangsstellung auf der einen Seite der Waschstrasse angeordnet sind und die in Fahrzeugdurchfahrtrichtung gesehen hintere Waschbürste eine zur vorderen Waschbürste seitlich versetzte, im Fahrzeugdurchfahrbereich liegende und von der Fahrzeugfrontfläche beaufschlagbare Stellung einnimmt und durch die Bewegung des Fahrzeuges auf der diagonalen Führungsbahn auf die andere Seite der Waschstraße verfahrbar ist, wobei die vordere Waschbürste der hinteren Waschbürste nacheilend angetrieben wird und nach dem Passieren des Fahrzeuges beide Waschbürsten vermittels eines gewichtsbelasteten Seilzuges in ihre Ausgangslage zurückgeführt werden.

Zum Waschen von Fahrzeugen, insbesondere Kraftfahrzeugen, sind neben feststehend eingebauten Waschanlagen mit über hydraulisch, pneumatisch oder elektromotorisch betätigbare Antriebsmittel verschwenkbaren, horizontalen und vertikalen, von Wasser beaufschlagten Waschbürsten auch solche Waschvorrichtungen bekannt, die aus einer portalförmigen, mit Eigenantrieb versehenen und parallel zum feststehenden Fahrzeug an Leitorganen in entgegengesetzten Richtungen verfahrbaren Waschbrücken mit horizontalen und vertikalen, von Wasser beaufschlagten Waschbürsten bestehen, wobei sowohl Antriebsmittel zur Höhenverstellung der in vertikalen Führungsschienen bewegbar gelagerten horizontalen Bürste als auch zum Schwenken der schwenkbar gelagerten vertikalen Bürsten vorgesehen sind. Die horizontale Waschbürste ist dabei als die Kontur des zu waschenden Fahrzeuges abtastendes Fühlorgan zur Steuerung hydraulischer, pneumatischer oder elektrischer Antriebsmittel für ihre Höhenverstellung ausgebildet und kann mit druck- und spannungsempfindlichen Fühlorganen zur Steuerung der Antriebsmittel für den Waschbrückenvorschub und -rücklauf in Abhängigkeit der Fahrzeugkontur versehen sein, wobei die druck- und spannungsempfindlichen Fühlorgane der horizontalen Waschbürste mit dem Fahrmotor der Waschbrücke über eine Steuereinrichtung verbunden sind (DE-C-20 57 395).

Diese bekannten Waschvorrichtungen haben gemeinsam, daß die an den Ständern oder der Waschbrücke vertikal angeordneten Waschbürsten zur Reinigung der Front-, Heck- und Seitenflächen von Fahrzeugen schwenkbar derart ausgebildet sind, daß die Waschbürsten mittels pneumatischer oder hydraulischer Einrichtungen in den Front-, Heck- und Seitenbereichen einschwenkbar sind und auf diese Weise den Ablauf des Waschprogramms ausführen. Für die Steuerungstechniken der pneumatischen, wahlweise hydraulischen Schwenkeinrichtungen sind verschiedene Schalter- und Ventilkombinationen erforderlich. Die Steuer- und Antriebsmittels sind störanfällig und bedürfen Wartungen in bestimmten Zeitintervallen. Hinzu kommt, daß sich die Grundlasten der Waschbürsten ab dem Zeitpunkt der Inbetriebnahme durch verschiedene Faktoren ändern, wie u. a. Gewichtsveränderung durch langsame Wassersättigung und Temperaturänderungen, Gewichtsabnahme durch Abnutzung und Veränderung durch mechanischen Verschleiß der Antriebe und der Lager. Derartige Grundlastveränderungen machen ab einer bestimmten Größe Nachjustierungen der Steuerelemente erforderlich, die bei den mit pneumatischen, hydraulischen, elektrischen oder elektronischen Steuerungssystemen arbeitenden Waschvorrichtungen nur von Fachkräften vorgenommen werden können.

Hinzu kommt noch, daß bei den bekannten, beispielsweise mit pneumatischen oder hydraulischen Schwenkeinrichtungen für die vertikalen Waschbürsten für die Reinigung von Seiten- und Heckflächen der Fahrzeuge versehen Waschvorrichtungen insbesondere nach längerer Betriebszeit Verzögerungen in den Schwenkbewegungen durch die Trägheit der Schwenksysteme nicht vermeidbar sind, so daß die Qualität der Reinigung von Heckflächen ungenügend ist.

Durch die DE-A-16 30 414 ist eine Waschvorrichtung gemäß dem Oberbegriff des Anspruchs 1 bekannt, die einen zur Fahrzeugdurchfahrtrichtung diagonal und waagerecht verlaufenden Querholm aufweist, an dem die beiden vertikalen Waschbürsten verfahrbar sind, wobei die Bürsten in ihrer Ausgangsstellung auf der einen Seite der Waschstraße angeordnet sind, während die in Fahrzeugdurchfahrtrichtung gesehene hintere Waschbürste eine zur vorderen Waschbürste seitlich versetzte, im Fahrzeugdurchfahrbereich liegende und von der Fahrzeugfrontfläche beaufschlagbare Stellung einnimmt und durch die Bewegung des Fahrzeuges auf der diagonalen Führungsbahn auf die andere Seite der Waschstraße verfahrbar ist, wobei die vordere Bürste der hinteren Bürste nacheilend angetrieben wird und nach dem Passieren des Fahrzeuges beide Bürsten in ihre Ausgangslage zurückgeführt werden.

Bei dieser Waschvorrichtung sind mindestens zwei vertikale Waschbürsten in mindestens einer geradlinigen, schräg zur Bewegungsrichtung des Fahrzeuges in einem feststehenden Rahmen angeordneten Führung innerhalb des und seitlich über den vom Fahrzeug überstrichenen streifenförmigen Bereich bewegbar. Die Anordnung und die Führung der beiden vertikalen Waschbürsten erfolgt dabei auf zwei nebeneinanderliegend angeordneten Fahrschienen, die zur Fahrzeugdurchfahrtrichtung diagonal und waagerecht verlaufend sind. Beide Fahrschienen weisen einen relativ großen Abstand auf, um ein Vorbeiführen der beiden vertikalen Waschbürsten zu gewährleisten. Jede dieser Waschbürsten ist dabei an einem Schlitten befestigt, der auf der jeweils ihm zugeordneten Fahrschiene verfahrbar ist. Eine Anordnung der beiden vertikalen Waschbürsten zwischen den beiden Fahrschienen und auf einer zur Fahrzeugdurchfahrtrichtung diagonal und waagerecht verlaufenden Querholmmittelachse ist hier nicht vorgesehen.

Diese bekannte Vorrichtung dient zum selbsttätigen Waschen von Fahrzeugen auf Kraftfahrzeug-Waschstraßen, in denen die Fahrzeuge mit Vorzieh- oder Vorschieb-Fördereinrichtungen mit absolut kontinuierlicher Geschwindigkeit durch die Waschvorrichtung gezogen werden. Außerdem sieht die bekannte Waschvorrichtung für die Bürstenbewegung motorische Antriebe sowie Schaltschwellen zum Einschalten vor.

Nach der DE-A-22 28 567 ist eine feststehende Waschvorrichtung für durchlaufende Kraftfahrzeuge mit zwei vertikalen Waschbürsten bekannt, die je an einer schräg zur Fahrtrichtung angeordneten Führungsschiene an Wagen hängend gelagert und so geführt sind, daß die eine Bürste die Front und anschließend eine Wagenseite und die andere Bürste die andere Wagenseite und anschließend das Heck wäscht. Bei dieser Waschvorrichtung ist in der Ausgangsposition auf jeder Seite des zu reinigenden Kraftfahrzeuges eine der beiden Waschbürsten angeordnet und von dieser Grundstellung aus wird das Reinigen der durchfahrenden Kraftfahrzeuge vorgenommen. Eine intensive Reinigung eines Kraftfahrzeuges ist jedoch mit dieser Waschvorrichtung nicht möglich.

Nach der DE-B-19 51 067 ist ferner eine Anordnung zum Waschen von Fahrzeugen in Fahrzeugwaschanlagen bekannt, wobei diese Anordnung zum Waschen der praktisch vertikalen Flächen von relativ dazu bewegten Fahrzeugen mittels zweier um je eine vertikale Achse rotierender, walzenförmiger Waschbürsten in Fahrzeuganlagen, in denen jede Waschbürste auf je einem schräg zur Fahrzeuglängsachse verlaufenden Führungsteil über die gesamte Fahrzeugbreite hinweg horizontal verschiebbar angeordnet ist, darin besteht, daß jedes Führungsteil an seinem einen Ende auf jeweils einer der beiden Seiten der Fahrzeugwaschanlage um je eine vertikale Achse verschwenkbar gelagert und in seiner Ausgangsstellung mit seinem anderen Ende dem zu waschenden Fahrzeug schräg entgegengerichtet ausgeschwenkt ist, wobei die beiden Waschbürsten in ihrer Ausgangsstellung jeweils auf das gelagerte eine Ende des jeweiligen Führungsteils hin verschoben angeordnet sind. Die Anordnung und Zuordnung der beiden Waschbürsten erfolgt dabei an gesondert gelagerten und aufgehängten Führungseinrichtungen, so daß sich aufgrund der sehr aufwendigen konstruktiven Ausgestaltung dieser Waschanlage der Reinigungsvorgang für ein Kraftfahrzeug recht kompliziert darstellt.

Die Erfindung löst die Aufgabe, eine Waschvorrichtung, insbesondere für Omnibusse und Kastenwagen, zu schaffen, die eine gedrungene Bauart aufweist und bei der der durch die Fahrzeugdurchfahrtrichtung diagonal und waagerecht verlaufende Querholm ohne großen technischen Aufwand eine hohe Stabilität trotz des aufnehmenden und durch die vertikalen Waschbürsten gegebenen Gewichtes aufweist, wobei gleichzeitig die vertikalen Waschbürsten in der Ausgangsstellung auf kleinsten Raum unterbringbar sind, und mit der die Grundlaständerungen der Waschbürsten, soweit diese auftreten, mühelos ausgleichbar sind und die darüber hinaus unabhängig von Fremdenergien zur Erzeugung der erforderlichen Bewegungsabläufe mit geringstem technischen Aufwand arbeitet, wobei die zur Steuerung dieser Energien sonst erforderlichen hydraulischen, pneumatischen, elektronischen oder elektromagnetischen Steuereinrichtungen entfallen.

Zur Lösung dieser Aufgabe wird eine Waschvorrichtung für Fahrzeuge, insbesondere Omnibusse und Kastenwagen, gemäß der eingangs beschriebenen Art vorgeschlagen, die erfindungsgemäß in der Weise ausgebildet ist, daß der Querholm in an sich bekannter Weise zwei parallel zueinander verlaufende Fahrschienen für zwei hintereinanderliegend angeordnete, unabhängig voneinander auf den Fahrschienen verfahrbare Führungsschlitten aufweist, von denen jeder eine Waschbürste trägt und aus einer die Form eines Dreiecks aufweisenden, horizontal liegenden Tragplatte besteht, wobei der die vordere Waschbürste tragende Schlitten mit einer Längskante parallel zur ersten Fahrschiene und sich mit seiner dieser Längskante gegenüberliegenden Tragplattenspitze auf der zweiten Fahrschiene abstützt, wogegen der die hintere Waschbürste tragende Schlitten mit einer Längskante parallel zur zweiten Fahrschiene liegt und sich mit seiner dieser Längskante gegenüberliegenden Tragplattenspitze auf der ersten Fahrschiene abstützt, daß der die Waschbürsten in ihre Ausgangslage zurückführende Seilzug an dem die hintere Waschbürste tragenden Führungsschlitten angreift und daß der die vordere Waschbürste tragende Führungsschlitten über einen weiteren Seilzug mit einem Gewicht belastet ist, das diesen Führungsschlitten in Richtung zum anderen Führungsschlitten hin belastet, wobei das am zurückführenden Seilzug angeordnete Gewicht größer ist als das am weiteren Seilzug angeordnete Gewicht.

Mit einer derart ausgebildeten Waschvorrichtung wird erreicht, daß durch technisch sinnvollen Einsatz mechanischer Elemente die Vorrichtung von Fremdenergien zur Erzeugung der erforderlichen Bewegungsabläufe unabhängig gemacht wird. Die zur Steuerung der Energien erforderlichen elektronischen oder elektromagnetischen Steuereinrichtungen entfallen. Erforderliche Justiermaßnahmen sind vom Betreiber der Waschvorrichtung selbst, soweit er-

forderlich, durchführbar. Geringe Grundlastveränderungen werden durch die Steuerung der Wasch bürsten mittels der gewichtsbelasteten Seilzüge selbsttätig ausgeglichen, wobei diese Seilzüge für die Durchführung der erforderlichen Bewegungsabläufe für die Waschbürsten nur dann zum Einsatz gelangen, wenn die vordere Waschbürste der hinteren Waschbürste nacheilend in die der Ausgangsstellung etwa diagonal gegenüberliegende Endstellung bewegt wird und hierauf beide Waschbürsten über einen einzigen Seilzug in ihre Ausgangsstellung zurückgeführt werden. Die Waschvorrichtung benötigt lediglich elektrischen Strom für die Drehbewegung der Waschbürsten und für die Zuführung des Waschwassers zum Vorsprühen des zu waschenden Fahrzeuges, wahlweise für die Waschbürstenberieselung und für das Abspülen des zu waschenden Fahrzeuges nach erfolgter Waschbürstenwäsche. Elektronische oder elektromagnetische Steuereinrichtungen entfallen hierfür.

Besonders vorteilhaft eignet sich die Waschvorrichtung für die Reinigung von Omnibussen und geschlossenen Nutzfahrzeugen ; sie kann ergänzt werden mit einer oder mehreren horizontalen Waschbürsten zum Reinigen beispielsweise von Fahrzeugdachflächen.

Mittels der Waschvorrichtung erfolgt die Reinigung von Fahrzeugen während der kontinuierlichen Durchfahrt des zu reinigenden Fahrzeuges durch die Waschvorrichtung zunächst unter Ausnutzung der Schubkraft des durchfahrenden Fahrzeuges auf die im Durchfahrbereich des zu waschenden Fahrzeuges liegende hintere Waschbürste, wobei die vordere Waschbürste ihre Seitenposition zur Reinigung der Fahrzeugseitenfläche beibehält, während die durch die Schubkraft des durchfahrenden Fahrzeuges diagonal in ihre Endstellung bewegte hintere Waschbürste die Frontseitenreinigung des Fahrzeuges vornimmt. Nach Erreichen der Endstellung übernimmt diese hintere Waschbürste die Seitenflächenreinigung des Fahrzeuges. Ist die Reinigung der Fahrzeugseitenfläche durch die in der Ausgangsstellung verbliebene vordere Waschbürste beendet, dann wird diese Waschbürste vermittels der vorgesehenen Bewegungseinrichtung, wie Seilzug od. dgl., unter Aufrechterhaltung eines Anpreßdruckes an die Heckfläche des Fahrzeuges in die Endstellung übergeführt. Hat das Fahrzeug die Waschstraße verlassen, so werden beide Waschbürsten gemeinsam vermittels der Bewegungseinrichtung für die hintere Waschbürste in ihre Ausgangsstellung zurückbewegt, so daß diese Rückbewegung für die vordere Waschbürste von der hinteren Waschbürste aufgrund der erfindungsgemäßen Zuordnung und Anordnung der beiden Waschbürsten übernommen wird. Erfolgt das Überführen der vorderen Waschbürste von der Ausgangsstellung in die Endstellung und das Rückführen der beiden Waschbürsten von der Endstellung in ihre Ausgangsstellung mittels gewichtsbelasteter Seilzüge, so wird für die Durchführung dieser Bewegungsabläufe keine elektrische Energie benötigt.

Damit ist mit einem geringsten technischen Aufwand ein einwandfreies Reinigen von Fahrzeugen gewährleistet. Es ist somit ein wirtschaftliches Reinigungsverfahren durchführbar.

Die Waschvorrichtung zeichnet sich aus durch :

Fortfall aller im Waschvorrichtungsbereich liegenden störanfälligen elektronischen Steuerungselemente.

Ausnutzung der Schubkraft der durch die Waschvorrichtung fahrenden Fahrzeuge für die Steuerung der Bürstenbewegung zur Erzielung einer wascheffektiven Bürstenanlage.

Keine Fremdenergien, sondern mechaniche Steuerung über Seilzüge mit leicht justierbaren Gewichtspaketen.

Einfache Justierbarkeit der Bürstenbewegungen für eine effektive Bürstenanlage in Abhängigkeit der Grundlastveränderung der Bürsten durch den Betreiber selbst.

Reduzierung der Elektrosteuerung auf Ein- und Ausschaltung der Bürstendrehbewegung und der Wasserversorgung.

Große Waschleistungen, z. B. bis zu 40 Bussen pro Stunde.

Weitere vorteilhafte Ausgestaltungen der Erfindung gehen aus den Unteransprüchen hervor.

Im folgenden wird der Gegenstand der Erfindung in den Zeichnungen erläutert. Es zeigt

Figur 1   eine Seitenansicht der Waschvorrichtung,

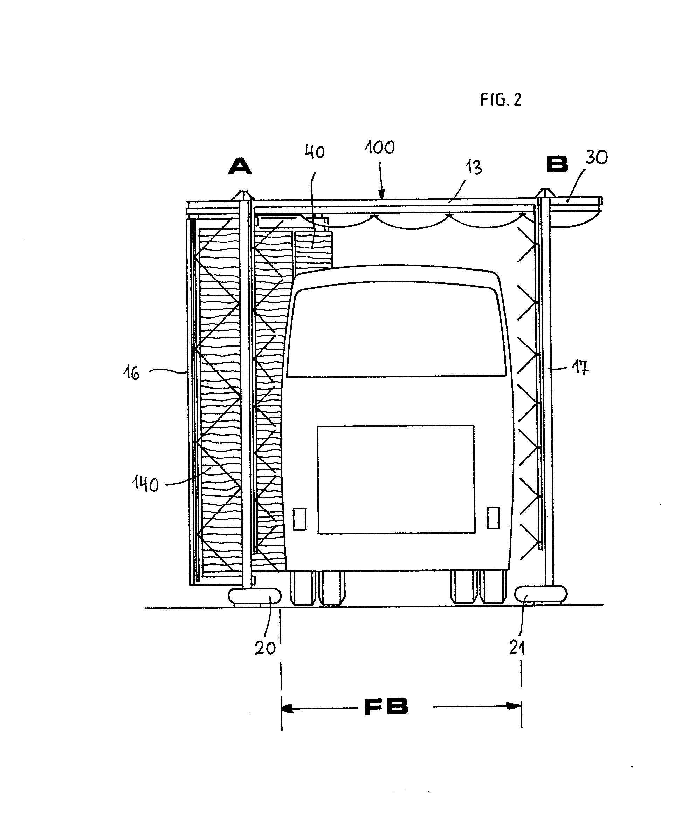

Figur 2   eine Vorderansicht der Waschvorrichtung,

Figur 3   eine Draufsicht auf die Waschvorrichtung,

Figur 4   den Waschablauf für ein Fahrzeug in den verschiedenen Waschphasen in schematischen Seitenansichten von oben,

Figur 5   eine Draufsicht auf eine weitere Ausführungsform einer Waschvorrichtung mit einendseitig gelagerten vertikalen Waschbürsten,

Figur 6   eine Seitenansicht der Halterung einer Waschbürste an dem auf dem Querholm verfahrbaren Führungsschlitten und

Figur 7   eine Seitenansicht der verschwenkbaren Halterung einer Waschbürste.

Die Waschbürste 100 weist im bodenseitigen Bereich zu beiden Seiten je eine Fahrzeugleitschiene 20, 21 auf, wobei jedoch auch nur eine einzige Fahrzeugleitschiene zur Anwendung gelangen kann, worauf nachstehend noch näher eingegangen wird. Vorteilhafterweise sind die beiden Fahrzeugleitschienen 20, 21 in ihrem Abstand voneinander veränderbar und somit an die Spurbreite der zu waschenden Fahrzeuge anpaßbar.

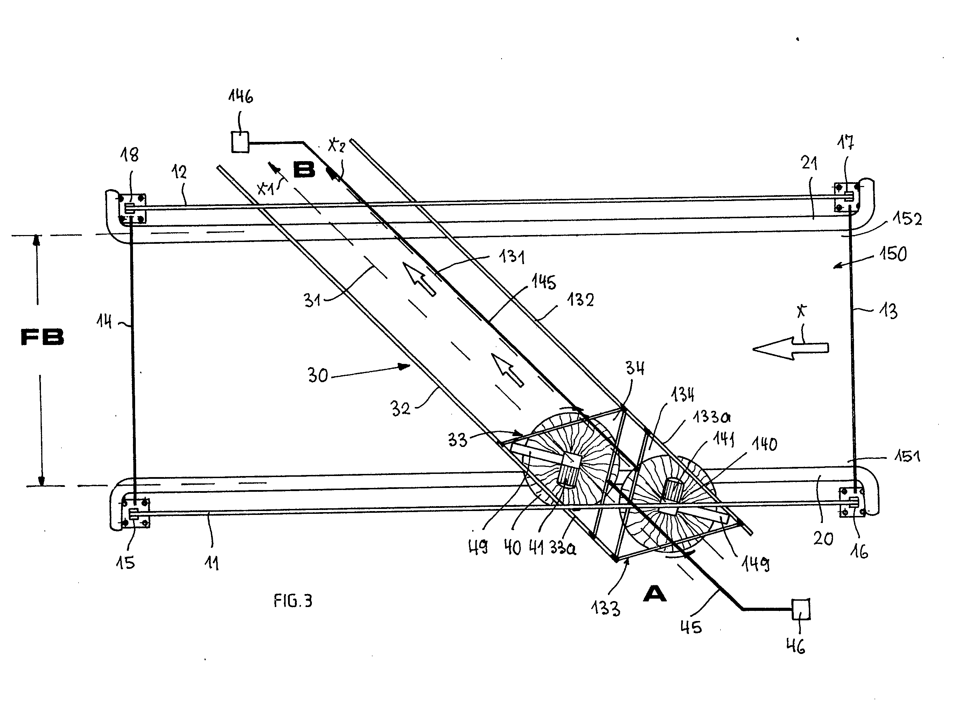

Das Rahmengestell 10 der Waschbrücke 100 weist etwa mittig einen oberen, diagonal verlaufenden Querholm 30 auf, der auf den Längsholmen 11, 12 des Rahmengestells 10 befestigt ist und seitlich über das von den Längsholmen 11, 12 begrenzte Rahmengestell 10 hinausgeführt ist (Fig. 3).

Dieser Brückenquerholm 30 ist bei der in Fig. 3 gezeigten Ausführungsform von der linken Waschstraßenseite 151 zur rechten Waschstraßenseite 152 schräg verlaufend, so daß der in Fahrzeugdurchfahrtrichtung X gesehen linke Bereich des Querholmes 30 gegenüber dem rechts zur Fahrzeugdurchfahrtrichtung Y liegenden Bereich in einem geringeren Abstand vom Querholm angeordnet ist, als der auf der anderen Seite der Fahrzeugdurchfahrtrichtung liegende Bereich des Querholmes 30, so daß dieser schräg verlaufend in dem Rahmengestell 10 der Waschbrücke 100 angeordnet ist. Es besteht jedoch auch die Möglichkeit, den Brückenquerholm 30 von der rechten Wachstraßenseite 152 zur linken Waschstraßenseite 151 schräg verlaufend anzuordnen.

Der diagonal verlaufende Brückenquerholm 30 weist zwei ebenfalls diagonal, d. h. parallel zum Querholm, verlaufende Führungsbahnen 31, 131 für zwei vertikale Waschbürsten 40, 140 auf. Die Bewegungsrichtung der beiden Waschbürsten 40, 140 erfolgt von der in Fig. 3 gezeigten Ausgangsstellung A in Richtung der Pfeile X1, X2.

Für das Verfahren der beiden Waschbürsten 40, 140 auf den Führungsbahnen 31, 131 des Brückenquerholmes 30 ist dieser mit zwei parallel und in einem Abstand zueinander verlaufenden Fahrschienen 32, 132 versehen, auf denen zwei Führungschlitten 33, 133 verschieblich angeordnet sind. Diese Führungsschlitten 33, 133 sind als dreieckförmige Tragplatten 34, 134 ausgebildet, von denen jede Tragplatte mit einer Anzahl von Laufrollen versehen ist, vermittels der die Tragplatten 34, 134 auf den Fahrschienen 32, 132 verfahrbar sind.

Diese Tragplatten 34, 134 tragen die beiden vertikalen Waschbürsten 40, 140, von denen jede Waschbürste mit einem Antriebsmotor 41 bzw. 141 versehen ist, um die Waschbürsten in Umdrehung versetzen zu können. Die Waschbürsten sind in an sich bekannter Weise ausgebildet und während des Waschvorganges von Wasser beaufschlagt.

Die beiden als dreieckförmige Tragplatten 34, 134 ausgebildeten Führungsschlitten 33, 133 sind auf den Fahrschienen 32, 132 des Brückenquerholmes 30 derart angeordnet, daß der die vordere Waschbürste 140 tragende Schlitten 133 mit seiner Längskante 133a parallel zur ersten Fahrschiene 132 und sich mit seiner dieser Längskante 133a gegenüberliegenden Tragplattenspitze auf der zweiten Fahrschiene 32 abstützt, wogegen der die hintere Waschbürste 40 tragende Schlitten 33 mit seiner Längskante 33a parallel zur zweiten Fahrschiene 32 liegt und sich mit seiner dieser Längskante 33a gegenüberliegenden Tragplattenspitze auf der ersten Fahrschiene 132 abstützt. Aufgrund dieser Anordnung und Ausbildung der Tragplatten 34, 134 bzw. der die beiden Waschbürsten 40, 140 tragenden Führungsschlitten 33, 133 ist es möglich, die beiden Waschbürsten 40, 140 in ihrer Ausgangsposition auf kleinstem Raum anordnen zu können (Fig. 3).

Aufgrund dieser Ausgestaltung der Führungsschlitten 33, 133 und deren Positionierung auf den diagonal zur Fahrzeugdurchfahrtrichtung verlaufenden Fahrschienen 32, 132 wird erreicht, daß die bei der Fahrzeugheckwäsche und bei der Fahrzeugfrontwäsche auftretenden Kräfte, die beim Andruck der Waschbürsten 40, 140 an die Fläche des zu reinigenden Fahrzeuges entstehen, über die Längskanten 33a, 133a der Führungsschlitten 33, 133 auf die beiden Fahrschienen 32, 132 abgeleitet und von diesen aufgenommen werden. Dadurch, daß die Führungsschlitten 33, 133 dreieckförmig ausgebildet und somit dicht aneinandergefahren werden können, kommen die Waschbürsten 40, 140 dicht nebeneinander zu liegen, so daß ungewaschene Schmutzstreifen an den Nachtstellen vermieden werden.

In der Waschausgangsposition nehmen die beiden Waschbürsten 40, 140 die in Fig. 3 gezeigte Stellung ein, d. h. die hintere Waschbürste 40 ist zur vorderen Waschbürste 140 um einen geringen Betrag seitlich versetzt, so daß diese Waschbürste 40 hinter der Waschbürste 140 seitlich zu liegen kommt, so daß beim Einfahren eines Fahrzeuges in die Waschbrücke 100 diese hintere Waschbürste 40 vom linken Bereich der Frontseite des zu waschenden Fahrzeuges beaufschlagt wird. Durch den Druck des durchfahrenden Fahrzeuges wird die Waschbürste 40 auf ihrer diagonal verlaufenden Führungsbahn 31 in die auf der anderen Seite der Waschstraße 150 liegende Endstellung B bewegt. Die Zuordnung der beiden Waschbürsten 40, 140 ist darüber hinaus noch derart, daß die vordere Waschbürste 140 beim Durchfahren eines Fahrzeuges durch die Waschbrücke 100 unter Aufrechterhaltung eines gleichmäßigen Anpreßdruckes an der Fahrzeugseitenwandfläche zur Anlage kommt.

Während die hintere Waschbürste 40 beim Durchfahren des zu waschenden Fahrzeuges durch die Waschbrücke 100 von der Durchfahrbewegung des Fahrzeuges auf ihrer Führungsbahn 31 verfahren wird, muß die vordere Waschbürste 140 nach Beendigung der Reinigung der linken Fahrzeugseitenwand auf ihrer diagonalen Führungsbahn 131 der Waschbürste 30 nachgeführt werden. Dies erfolgt mittels eines gewichtsbelasteten Seilzuges 145, dessen bei 146 angedeutetes Gewicht auf der rechten Waschstraßenseite 152 in dem Rahmengestell 10 der Waschbrücke 100 gehalten ist. Der Seilzug 145, der einendseitig an dem Führungsschlitten 133 angeschlossen ist, ist parallel zur diagonalen Führungsbahn 131 des Führungsschlittens 133 und im Endbereich des Brückenquerholmes 30 über eine in der Zeichnung nicht dargestellte Rolle geführt, so daß am freien Ende dieses Seilzuges 145 dann das Gewicht 146 angeordnet ist.

Haben beide Waschbürsten 40, 140 ihre Endstellung B nach Beendigung des Waschvorganges eingenommen, ist eine Zurückführung der Waschbürsten in ihre Ausgangsstellung A erforderlich. Dies erfolgt vermittels eines an dem Führungsschlitten 33 angreifenden Seilzuges 45, der ebenfalls parallel zur Führungsbahn 31 des Führungsschlittens 33 und am Ende des Brückenquerholmes 30 über eine in der Zeichnung nicht dargestellte Umlenkrolle geführt ist. Das freie Ende dieses Seilzuges 45 trägt ein Gewicht 46, welches größer als das Gewicht 146 des Seilzuges 145 ist. Da das Gewicht 146 des Seilzuges 145 nur so groß bemessen sein muß, daß die Waschbürste 140 an der Heckfläche des zu waschenden Fahrzeuges von der Ausgangsstellung A in die Endstellung B bewegbar ist, hat das Gewicht 46 zusammen mit dem Seilzug 45 die Aufgabe, nicht nur die Waschbürste 40 aus der Endstellung B in die Ausgangsstellung A zu bewegen, sondern auch gleichzeitig die Waschbürste 140. Haben nämlich die beiden Waschbürsten 40, 140 ihre Endstellung B erreicht, dann nehmen die beiden Waschbürsten 40, 140 die gleiche versetzte Stellung ein, wie diese in der Ausgangsstellung A gegeben ist, d. h. die vordere Waschbürste 140 ist in Richtung zum Fahrzeugdurchfahrbereich seitlich gegenüber der Waschbürste 40 versetzt. Wird nun die Waschbürste 40 vermittels des Gewichtes 46 von der Endstellung B in die Ausgangsstellung A bewegt, dann wird bei dieser Rückführungsbewegung von der Waschbürste 40 die Waschbürste 140 beaufschlagt und von der Waschbürste 40 mitgenommen. Da vermittels des Gewichtes 46 somit die beiden Waschbürsten 40, 140 in ihre Ausgangsstellung A zurückgeführt werden sollen, muß das Gewicht 46 größer sein als das Gewicht 146.

Die Fahrzeugwaschvorrichtung arbeitet wie folgt :

Die Reinigung eines Fahrzeuges erfolgt während seiner kontinuierlichen Durchfahrt durch die Waschvorrichtung, und zwar unter Ausnutzung der Schubkraft des durchfahrenden Fahrzeuges auf die hintere Waschbürste 40, die durch die Schubkraft des Fahrzeuges von der Ausgangsstellung diagonal in die Endstellung B bewegt wird.

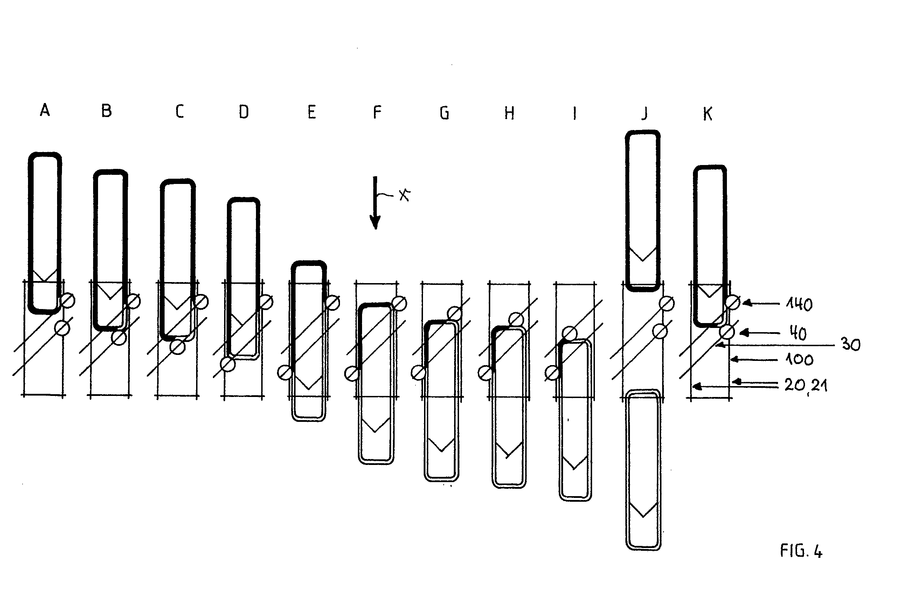

In der Ausgangsstellung nehmen die beiden Waschbürsten 40, 140 die in Fig. 4 bei A dargestellte Ausgangsposition ein. Dabei ist die hintere Waschbürste in dem Fahrzeugdurchfahrbereich FB angeordnet und wird beim Einfahren eines Fahrzeuges von dessen Frontfläche mitgenommen und diagonal zwangsgeführt, wobei bei einem weiteren Vorschub des Fahrzeuges die hintere Waschbürste 40 die Frontseite des Fahrzeuges reinigt, wie dies aus den Stellungen B, C und D der Waschbürste 40 in Fig. 4 ersichtlich ist. Während des Fahrzeugvorlaufes und der Reinigung der Fahrzeugfrontfläche durch die Waschbürste 40 erfolgt das Waschen der Fahrzeugseitenfläche durch die zunächst in der Ausgangsstellung verbleibende Waschbürste 140, bis diese den Heckbereich des Fahrzeuges erreicht hat, wie dies aus den Stellungen B, C, D, E und F der Waschbürste 140 zu entnehmen ist (Fig. 4). In dem Augenblick, in dem die Waschbürste 40 die Frontfläche des Fahrzeuges verlassen hat, übernimmt die Waschbürste 40 die Reinigung der anderen Seitenfläche des Fahrzeuges, bis letztlich diese Waschbürste 40 den Heckflächenbereich des Fahrzeuges erreicht hat, also etwa die

Stellung I in Fig. 4. Hat die Waschbürste 140 die Heckfläche des Fahrzeuges erreicht, so wird diese Waschbürste vermittels ihres gewichtsbelasteten Seilzuges unter Aufrechterhaltung eines ausreichenden Anpreßdruckes an der Heckfläche des durchfahrenden Fahrzeuges entlanggeführt und reinigt die Heckfläche entsprechend den in Fig. 4 gezeigten Stellungen G, H und I.

Nach Beendigung des Waschvorganges werden dann beide Waschbürsten 40, 140 über den mit der Waschbürste 40 verbundenen Seilzug in ihre Ausgangsstellung J und K in Fig. 4 bewegt und der Waschvorgang kann bei einem neu eingefahrenen Fahrzeug erneut beginnen. Um den Waschablauf in Fig. 4 zu verdeutlichen, sind die Konturen des ungereinigten Fahrzeuges vollflächig ausgezogen, wogegen die in den einzelnen Waschabschnitten A bis K gereinigten Fahrzeugwandflächen durch nicht vollflächig ausgezogene Abschnitte angedeutet sind.

Die Waschbewegung der Waschbürsten 40, 140 ist ein zwangsläufiges Ergebnis des Vorschubes der zu waschenden Fahrzeuge für die Reinigung von Front-, Heck- und beiden Seitenflächen. Dadurch, daß die Waschbürste 40 seilzugbelastet ist, werden bei Waschbeginn die beiden Waschbürsten von diesem Seilzug in ihrer Ausgangsposition A gehalten (Fig. 3). Dies wird erreicht, weil das Gewicht an dem Seilzug 45 größer ist als das Gewicht 146 an dem Seilzug 145. Der Seilzug 45 entlastet die Waschbürste 140, sobald die Waschbürste 40 durch den Vorschub des Fahrzeuges ihre Waschbewegung an der Frontseite von links nach rechts beginnt. Der Seilzug sorgt außerdem dafür, daß die Waschbürste bei z. B. ruckartigem Vorschub des Fahrzeuges nicht ihren Waschkontakt zur Frontseite des Fahrzeuges verliert. Der Seilzug 145, der an dem die Waschbürste 140 tragenden Schlitten 133 angreift, sorgt unmittelbar nach Waschbeginn der Waschbürste 40 durch die dadurch verursachte Anhebung des Gewichtes des Seilzuges 45 für einen waschintensiven Waschkontakt der Waschbürste 40 an der linken Seite des Fahrzeuges und anschließend an der Fahrzeugheckfläche.

Anstelle von zwei Fahrzeugleitschienen 20, 120 ist auch die Verwendung einer einzigen Fahrzeugleitschiene 20 ausreichend. Ist die Ausgangsposition der beiden Waschbürsten 40, 140 auf der linken Seite 151 der Waschstraße 150, dann ist auch die Fahrzeugleitschiene auf der linken Seite der Waschstraße vorgesehen. Die Ausgangsposition der beiden Waschbürsten 40, 140 ist zweckmäßig dort, wo die Fahrzeuglenkung ist.

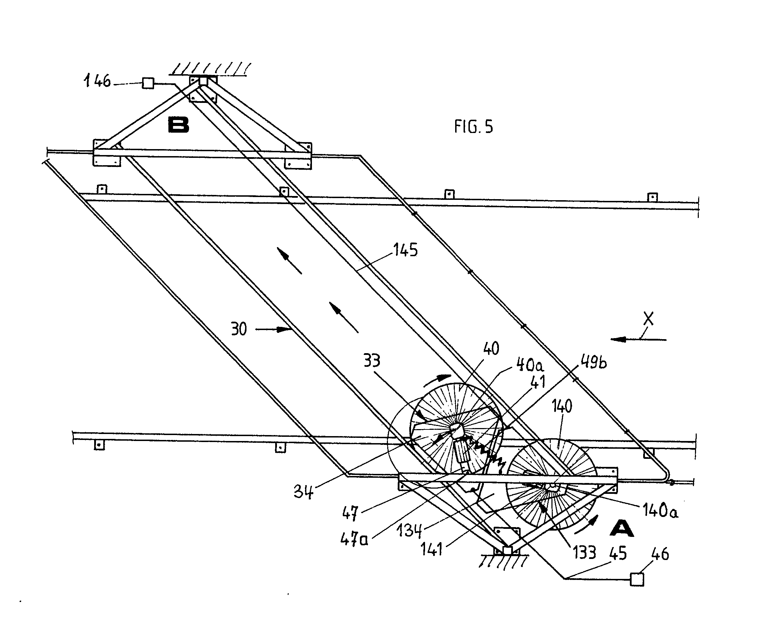

Die Waschvorrichtung nach Fig. 5 besteht aus dem diagonal verlaufenden Querholm 30, der an zwei sich gegenüberliegenden Wänden einer Waschhalle befestigt sein kann. Auf dem Querholm 30 sind die als Tragplatten 34, 134 ausgebildeten Führungsschlitten 33, 133 verfahrbar. Die Tragplatten 34, 134 tragen die vertikalen Waschbürsten 40, 140.

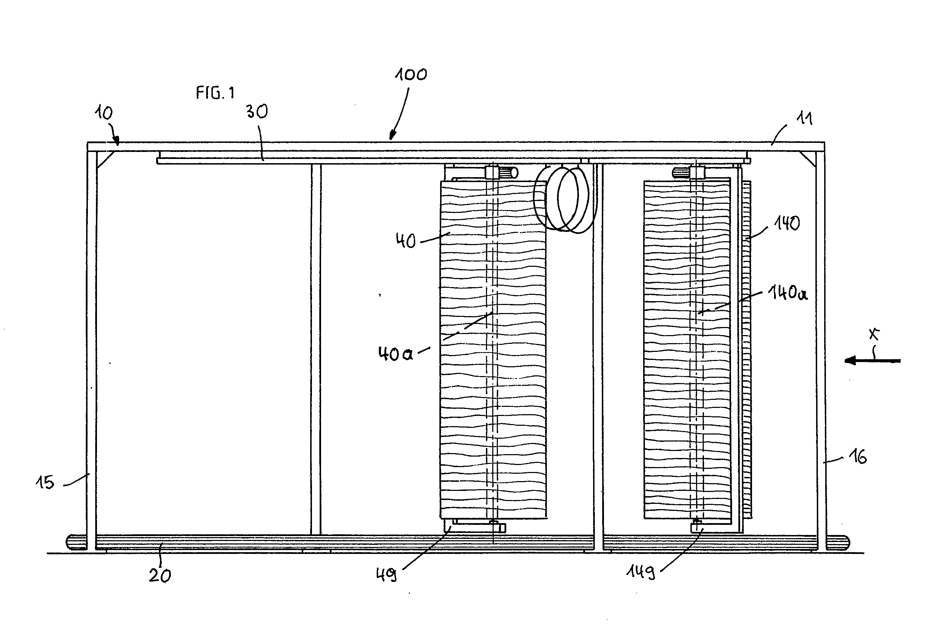

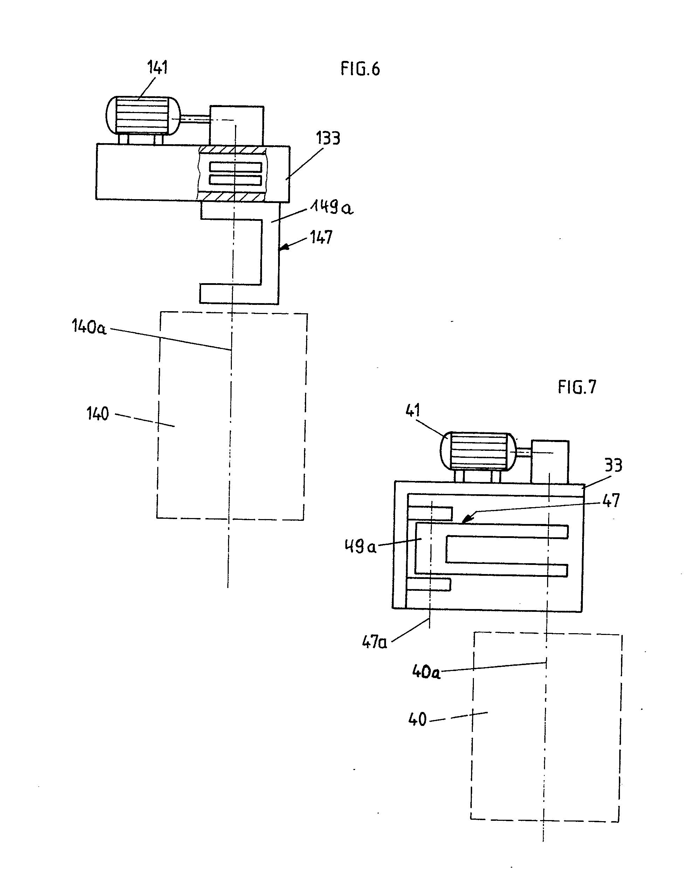

Während bei der Ausführungsform nach Fig. 1 die Antriebsachsen 40a, 140a der Waschbürsten 40, 140 beidendseitig in als U-förmige Bügel ausgebildeten Bügelständern gehalten sind, die an den Tragplatten 34, 134 befestigt sind, sind bei der Waschvorrichtung nach Fig. 5 die Waschbürsten 40, 140 nur einendseitig gelagert und an den Tragplatten 34, 134 mittels Halterungen 47, 147 gehalten, die auch als U-förmige Bügel 49a, 149a ausgebildet sind, jedoch mit ihren Bügelschenkeln die Antriebsachsen 40a, 140a der Waschbürsten 40, 140 in ihren oberen Bereichen halten. Der Abstand der Bügelschenkel der Halterungen 47, 147 ist gegenüber der Länge der Waschbürstenantriebsachsen 40a, 140a kürzer bemessen (Fig. 6 und 7). Während die Halterung 147 für die vordere Waschbürste 140 fest an der Tragplatte 134 des Führungsschlittens 133 befestigt ist, ist die Halterung 47 mit der hinteren Waschbürste 40 um eine vertikale Achse 47a verschwenkbar an der Tragplatte 34 des Führungsschlittens 33 gehalten (Fig. 5 und 7). Damit ein ausreichender Anlagedruck der Waschbürste 40 an die Fahrzeugseitenwand während des Waschvorganges gewährleistet ist, ist die verschwenkbare Halterung 47 entweder druckfederbeaufschlagt oder steht unter der Wirkung einer Zugfeder 49b (Fig. 5). Zur Stabilitätserhöhung der Anlage sind die Waschbürsten 40, 140 mit ihren Antriebsachsen 40a, 140a außermittig an den Tragplatten 34, 134 gehalten (Fig. 5).

## Patentansprüche

1. Waschvorrichtung für Fahrzeuge, insbesondere Omnibusse und Kastenwagen, die mit eigenem Antrieb durch die Waschvorrichtung gefahren werden, unter Verwendung von mindestens zwei senkrechten, von Wasser beaufschlagten Waschbürsten (40, 140), die an einem zur Fahrzeugdurchfahrtrichtung diagonal und waagerecht in einer Waschbrücke verlaufenden Querholm (30) verfahrbar sind, wobei die Waschbürsten in ihrer Ausgangsstellung auf der einen Seite der Waschstraße angeordnet sind und die in Fahrzeugdurchfahrtrichtung gesehen hintere Waschbürste (40) eine zur vorderen Waschbürste seitlich versetzte, im Fahrzeugdurchfahrbereich liegende und von der Fahrzeugfrontfläche beaufschlagbare Stellung einnimmt und durch die Bewegung des Fahrzeuges auf der diagonalen Führungsbahn auf die andere Seite der Waschstraße verfahrbar ist, wobei die vordere Waschbürste (140) der hinteren Waschbürste nacheilend angetrieben wird, dadurch gekennzeichnet, daß nach dem Passieren des Fahrzeuges beide Waschbürsten (40, 140) vermittels eines gewichtsbelasteten Seilzuges (45) in ihre Ausgangslage zurückgeführt werden, und daß der Querholm (30) in an sich bekannter Weise zwei parallel zueinander verlaufende Fahrschienen (32, 132) für zwei hintereinanderliegend angeordnete, unabhängig voneinander auf den Fahrschienen verfahrbare Führungsschlitten (33, 133) aufweist, von denen jeder eine Waschbürste (40 ; 140) trägt und aus einer die Form eines Dreiecks aufweisenden, horizontal liegenden Tragplatte (34 ; 134) besteht, wobei der die vordere Waschbürste (140) tragende Schlitten (133) mit einer Längskante (133a) parallel zur ersten Fahrschiene (132) und sich mit seiner dieser Längskante (133a) gegenüberliegenden Tragplattenspitze auf der zweiten Fahrschiene (32) abstützt, wogegen der die hintere Waschbürste (40) tragende Schlitten (33) mit einer Längskante (33a) parallel zur zweiten Fahrschiene (32) liegt und sich mit seiner dieser Längskante (33a) gegenüberliegenden Tragplattenspitze auf der ersten Fahrschiene (132) abstützt, daß der die Waschbürsten (40, 140) in ihre Ausgangslage zurückführende Seilzug (45) an dem die hintere Waschbürste (40) tragenden Führungsschlitten (33) angreift und daß der die vordere Waschbürste (140) tragende Führungsschlitten (133) über einen weiteren Seilzug (145) mit einem Gewicht (146) belastet ist, das diesen Führungsschlitten (133) in Richtung zum anderen Führungsschlitten (33) hin belastet, wobei das am zurückführenden Seilzug (45) angeordnete Gewicht (46) größer ist, als das am weiteren Seilzug (145) angeordnete Gewicht (146).

2. Waschvorrichtung nach Anspruch 1, dadurch gekennzeichnet, daß die Waschbrücke (100) mindestens eine bodenseitige Fahrzeugleitschiene (20, 21) aufweist.

3. Waschvorrichtung nach Anspruch 1 und 2, dadurch gekennzeichnet, daß zur vertikalen Halterung der Waschbürsten (40, 140) Bürstenständer (49, 149) vorgesehen sind, die einendseitig an den Tragplatten (34, 134) der Führungsschlitten (33, 133) befestigt sind und von denen jede aus einem U-förmigen Bügel (49a, 149a) besteht, dessen waagerechte Schenkel die vertikalen Antriebsachsen (40a, 140a) der beiden Waschbürsten (40, 140) antriebsachsenendseitig aufnehmen.

4. Waschvorrichtung nach Anspruch 1 und 2, dadurch gekennzeichnet, daß zur vertikalen Halterung der beiden Waschbürsten (40, 140) diese einendseitig mit ihren Antriebsachsen (40a, 140a) vermittels Halterungen (47, 147) an den Tragplatten (34, 134) der Führungsschlitten (33, 133) gehalten sind und daß jede Halterung (47 ; 147) aus einem U-förmigen Bügel (49a, 149a) besteht, der gegenüber der Länge der Waschbürste (40 ; 140) eine geringere Länge aufweist und dessen beiden in einem Abstand voneinander angeordneten Schenkel die vertikale Antriebsachse (40a ; 140a) der Waschbürste (40 ; 140) in ihrem oberen Bereich aufnehmen.

5. Waschvorrichtung nach Anspruch 1 bis 4, dadurch gekennzeichnet, daß die vordere Waschbürste (140) mit ihrer Antriebsachsenhalterung (147) fest an der Tragplatte (134) des Führungsschlittens (133) befestigt ist.

6. Waschvorrichtung nach Anspruch 1 bis 5, dadurch gekennzeichnet, daß die hintere Waschbürste (40) mit ihrer Antriebsachsenhalterung (47) um eine vertikale Achse (47a) verschwenkbar an der Tragplatte (34) des Führungsschlittens (133) gehalten ist und daß die Antriebsachsenhalterung (47) mit einer den Fahrzeugseitenwandanpreßdruck aufrechterhaltenden Zug-oder Druckfeder (49b) in Wirkverbindung steht.

7. Waschvorrichtung nach Anspruch 1 bis 6, dadurch gekennzeichnet, daß die Antriebsachsen (40a, 140a) der beiden Waschbürsten (40, 140) außermittig an den Tragplatten (34, 134) der Führungsschlitten (33, 133) befestigt sind.

**Claims**

1. Washing device for vehicles, especially for self-propelled omnibuses and vans driven through the washing device, using at least two vertical, water-admitting washing brushes (40, 140) which are movable on a transverse bar (30) running in a washing bridge diagonally and horizontally to the direction of the vehicle's passage within a washing bridge, the washing brushes in their initial position being arranged at the one side of the washing-street and the rear washing brusch (40) as seen from the vehicle in the passage direction being placed in a laterally displaced position to the front washing brush lying in the passage area of the vehicle and permitting contact with the vehicle's front surface and being movable by the vehicle's motion on the diagonal guideway, the front washing brush (140) being driven with lag as compared with the rear washing brush, characterized in that after the vehicle's passage, the two washing brushes (40, 140) are repositioned into their initial position by means of a weight loaded rope winch (45) and that the transverse bar (30) has two driving rails (32, 132) running parallel in a manner already known, and bearing two guide blocks (33, 133) arranged one behind the other and independently movable on the driving rails, each of these guide blocks carrying one washing brush (40 ; 140) and consisting of a horizontally located carrying plate (34, 134) of triangular shape, the block (133) carrying the front washing brush (140) supporting itself with one longitudinal edge (133a) parallel to the first driving rail (132) and with the top of the supporting plate opposite this longitudinal edge (133a) against the second driving rail (32), whereas the block (33) supporting the rear washing brush (40) being positioned parallel to one longitudinal edge (33a) against the second driving rail (32) and supporting itself on the first driving rail (132) with the top of the supporting plate opposite this longitudinal edge (33a), characterized in that the rope winch (45) repositioning the washing brushes (40, 140) into their initial position catches the guide block (33) carrying the rear washing brush (40) and in that the guide block (133) bearing the front washing brush (140) is loaded with a weight (146) over a further rope winch (145) which weights this guide block (133) in the direction of the other guide block (33), the weight (46) located at the repositioning rope winch (45) being larger than the weight (146) located at the other rope winch (145).

2. Washing device according to claim 1, characterized in that the washing bridge (100) has at least one bottom sliding rail (20, 21) for the vehicle.

3. Washing device according to claims 1 and 2, characterized in that for the vertical attachment of the washing brushes (40, 140) posts are provided (49, 149) for the brushes, which are attached with one end to the carrying plates (34, 134) of the guide blocks (33, 133) and each of which consists of an u-shaped bow (49a, 149a) the horizontal leg of which bears the vertical driving axles (40a, 140a) of the two washing brushes (40, 140) on the side of the driving axles.

4. Washing device according to claims 1 and 2, characterized in that for the vertical attachment of the two washing brushes (40, 140) these are held at one side with their driving axles (40a, 140a) by means of fixing devices (47, 147) at the carrying plates (34, 134) of the guide blocks (33, 133) and characterized in that each fixing device (47, 147) consists of an u-shaped bow (49a, 149a), which is shorter than the washing brush (40, 140) and the legs of which, arranged at a certain distance between each other, are bearing the vertical driving axle (40a, 140a) of the washing brush (40, 140) in its upper area.

5. Washing device according to claims 1 to 4, characterized in that the front washing brush (140) is firmly attached to the carrying plate (134) of the guide block (133) with its fixing device of the driving axle (147).

6. Washing device according to claims 1 to 5, characterized in that the rear washing brush (40) with its fixing device for the driving axle (47) is held at the carrying plate (34) of the guide block (133) and swivelling around its vertical axis (47a) and characterized in that the fixing device for the driving axle (47) is in an acting contact with a tension or pression spring (49b) maintaining the pressure against the vehicle's lateral wall.

7. Washing device according to claims 1 to 6, characterized in that the driving axles (40a, 140a) of the two washing brushes (40, 140) are eccentrically attached to the carrying plates (34, 134) of the guide blocks (33, 133).

**Revendications**

1. Dispositif de lavage pour véhicules, notamment pour autobus et fourgons, qui traversent le dispositif de lavage en étant propulsés par leur propre commande, qui utilise au moins deux brosses de lavage (40, 140) verticales chargées d'eau qui sont déplaçables dans un pont de lavage sur une travée transversale (30) qui est diagonale par rapport au sens de passage des véhicules et horizontale, les brosses de lavage étant placées, dans leur position de départ, sur l'un des côtés du dispositif de lavage et la brosse postérieure (40), ceci étant vu dans le sens de passage des véhicules, prenant une position dans la zone de passage des véhicules qui est décalée latéralement par rapport à la brosse de lavage antérieure de manière à pouvoir charger d'eau la surface frontale du véhicule et pouvant être déplacée par le mouvement du véhicule sur la voie diagonale vers l'autre côté du dispositif de lavage, la brosse de lavage antérieure (140) étant commandée en retard par rapport à la brosse de lavage postérieure, caractérisé en ce que, après le passage du véhicule, les deux brosses de lavage (40, 140) sont reconduites dans leur position de départ au moyen d'une commande par câble à contrepoids (45) et que la travée transversale (30) présente, de manière connue en soi, deux rails de roulement (32, 132) placés parallèlement l'un par rapport à l'autre pour deux coulisseaux (33, 133) placés l'un derrière l'autre et déplaçables sur les rails de roulement indépendamment l'un de l'autre, chacun d'entre eux portant une brosse de lavage (40 ; 140) et étant constitué par une plaque de support (34 ; 134) placée dans le sens horizontal présentant la forme d'un triangle, le coulisseau (133) qui porte la brosse de lavage antérieure (140) étant parallèle par une arête longitudinale (133a) au premier rail de roulement (132) et s'appuyant par l'extrémité de la plaque de support située en face de cette arête longitudinale (133a) sur le deuxième rail de roulement (32) au contraire du coulisseau (33) qui porte la brosse de lavage postérieure (40) qui est parallèle par une arête longitudinale (33a) au deuxième rail de roulement (32) et qui s'appuie par l'extrémité de la plaque de support située en face de cette arête longitudinale (33a) sur le premier rail de roulement (132), que la commande à câble (45) qui ramène les brosses de lavage (40, 140) à leur position de départ s'accroche au coulisseau (33) qui porte la brosse de lavage postérieure (40) et que le coulisseau (133) qui porte la brosse de lavage antérieure (140) est chargé d'un poids (146) par une autre commande à câble (145) qui charge ce coulisseau (133) en direction de l'autre coulisseau (33), le poids (46) qui est placé sur la commande à câble de retour (45) étant plus élevé que le poids (146) placé sur l'autre commande à câble (145).

2. Dispositif de lavage selon la revendication 1, caractérisé en ce que le pont de lavage (100) présente au moins un rail de guidage (20, 21) placé sur le sol.

3. Dispositif de lavage selon les revendications 1 et 2, caractérisé en ce que des porte-brosses (49, 149) sont prévus pour le support vertical des brosses de lavage (40, 140), l'une de leurs extrémités étant fixée aux plaques de support (34, 134) des coulisseaux (33, 133), chacun étant formé par un étrier en forme de U (49a, 149a) dont les côtés horizontaux saisissent l'extrémité des arbres de commande verticaux (40a, 140a) des deux brosses de lavage (40, 140).

4. Dispositif de lavage selon les revendications 1 et 2, caractérisé en ce que, pour le support vertical des brosses de lavage (40, 140), celles-ci sont maintenues à l'une de leurs extrémités par leurs arbres de commande (40a, 140a) sur les plaques de support (34, 134) des coulisseaux (33, 133) par des supports (47, 147) et que chaque support (47, 147) est constitué par un étrier en forme de U (49a, 149a) qui est d'une longueur inférieure à la longueur de la brosse de lavage (40 ; 140) et dont les deux côtés placés à une certaine distance l'un de l'autre saisissent l'arbre de commande vertical (40a ; 140a) de la brosse de lavage (40 ; 140) dans sa zone supérieure.

5. Dispositif de lavage selon les revendications 1 à 4, caractérisé en ce que la brosse de lavage antérieure (140) est fixée de manière fixe à la plaque de support (134) du coulisseau (133) par son support d'arbre de commande (147).

6. Dispositif de lavage selon les revendications 1 à 5, caractérisé en ce que la brosse de lavage postérieure (40) est maintenue par son support d'arbre de commande (47) sur la plaque de support du coulisseau (133) de manière à pivoter autour d'un axe vertical (47a) et que le support d'arbre de commande (47) est en relation effective avec un ressort de traction et de poussée (49b) qui maintient la pression d'appui des parois du véhicule.

7. Dispositif de lavage selon les revendications 1 à 6, caractérisé en ce que les arbres de commande (40a, 140a) des deux brosses de lavage (40, 140) sont fixés de façon excentrique sur les plaques de support (34, 134) des coulisseaux (33, 133).

FIG. 1

FIG. 2

FIG.3

FIG. 4

140
40
30
100
20,21

0 103 222

FIG. 5

FIG.6

141

133

149a

147

140a

140

FIG.7

41

33

47

49a

47a

40a

40